# EUROPÄISCHE PATENTSCHRIFT

(11) **EP 2 732 950 B1**
(45) Veröffentlichungstag und Bekanntmachung des Hinweises auf die Patenterteilung: **29.04.2015**
(21) Anmeldenummer: 13192999.4
(22) Anmeldetag: 15.11.2013
(51) Int. Cl.: B29C 45/00, B29C 33/00

(54) **Spritzgussform und Spritzgussteil**
Injection mould and injection moulded part
moule pour injection et piéce moulée par injection

(30) Priorität: 20.11.2012 DE 202012104499 U; 15.07.2013 DE 102013107468
(43) Veröffentlichungstag der Anmeldung: 21.05.2014
(73) Patentinhaber: PAS Deutschland GmbH, 16816 Neuruppin (DE)
(72) Erfinder: Seikel, Dr. Michael, 10829 Berlin (DE); Schulze, Robert, 13465 Berlin (DE)
(74) Vertreter: Witte, Weller & Partner Patentanwälte mbB

(56) Entgegenhaltungen:
- JP-A- 2004 338 154
- JP-A- 2005 135 737
- US-A1- 2009 295 023
- US-A1- 2010 327 491

## Beschreibung

Spritzgussteile sind in vielfältigen Formen bekannt. Bei bestimmten Spritzgussteilen, insbesondere im Bereich von Haushaltsgeräten oder Unterhaltungselektronik, bestehen hohe Anforderungen an das Aussehen des Spritzgussteils, so wie es vom Benutzer wahrgenommen wird. Dabei ist es insbesondere gewünscht, dass ein Sichtteil des Spritzgussteils, also der Teil des Spritzgussteils, den der Benutzer sieht und gegebenenfalls berührt, möglichst homogen und gleichmäßig ausgeführt ist.

Werden heute Materialien mit Farbpartikeln verwendet, zum Beispiel gefärbtes Granulat zum Erzielen der Farbe Silber, so lassen sich heute noch keine befriedigenden Ergebnisse erzielen. Stattdessen ist es erforderlich, ein Spritzgussteil aus Rohgranulat herzustellen und dann mit der gewünschten Farbe zu lackieren. Dies macht den Herstellungsprozess kompliziert und teuer. Das Lackieren offenbart oftmals zudem Materialspannungen, die im Spritzgussprozess eingefroren wurden. Dies führt dazu, dass die lackierte Sichtseite optisch inhomogen und das lackierte Spritzgussteil daher nicht für eine Verwendung geeignet ist.

JP 2005-135737 offenbart eine Spritzgussform, bei der von der Einspritzstelle ein Kanal zur Oberseite der Spritzgussform geführt ist, also dahin, wo die Sichtseite des Drehknopfs erzeugt werden soll. Dadurch, dass die Spritzgussmasse zur Sichtseite des Drehknopfes gelenkt wird und sich von dort verteilt, soll eine Spritzgussnaht vermieden werden.

US 2009/0295023 A1 zeigt eine Spritzgussform, bei der ein provisorischer Rippenbereich ausgebildet ist. Mit dem Rippenbereich soll eine provisorische Rippe an einer Seite ausgebildet werden, die nicht die Sichtseite des Spritzgussprodukts ist. Die Spritzgussmasse wird in den provisorischen Rippenbereich über einen Anguss injiziert, der als Tunnelanguss oder als Nasenanguss geformt ist. Die Offenbarung beschränkt sich hier auf quaderförmige Produkte.

US 2010/0327491 A1 zeigt ebenfalls eine Spritzgussform mit einem provisorischen Rippenbereich, wobei hier auf das Fertigen von runden Produkten eingegangen wird.

JP 2004-338154 offenbart eine Spritzgussform, bei der eine möglichst gleichmäßige Materialverteilung an einer Sichtseite eines Spritzgussprodukts erzielt werden soll. Um dies zu erzielen, werden vom Einspritzpunkt beabstandet zwei Kanäle vorgeschlagen, die Spritzgussmasse zur Sichtseite der Taste führen können. Diese Ausgestaltung soll einen verstärkten Materialfluss zur Sichtseite bewirken.

Es ist eine Aufgabe der vorliegenden Erfindung, eine verbesserte Spritzgussform und ein verbessertes Spritzgussteil aufzuzeigen, mit denen dieser Nachteil überwunden werden kann.

Nach einem Aspekt der Erfindung wird die Aufgabe gelöst durch eine Spritzgussform für die Herstellung eines Spritzgussteils, insbesondere für die Herstellung einer Bedientaste eines Haushaltsgeräts, wobei die Spritzgussform einen ersten Hohlraum für einen ersten Abschnitt des Spritzgussteils, einen zweiten Hohlraum für einen zweiten Abschnitt des Spritzgussteils und eine Öffnung zum Einspritzen von Kunststoff aufweist, wobei der erste und der zweite Hohlraum zumindest entlang eines linienförmigen Verbindungsabschnitts in fluidmäßiger Verbindung stehen, wobei der erste Abschnitt ein Sichtteil des Spritzgussteils ist und der zweite Abschnitt ein Seitenteil des Spritzgussteils ist, wobei sich der erste Abschnitt zumindest im Wesentlichen in einer ersten Ebene erstreckt, sich der zweite Abschnitt zumindest im Wesentlichen in einer zweiten Ebene erstreckt und die erste und die zweite Ebene in einem Winkel zueinander stehen, wobei die Öffnung in den zweiten Hohlraum mündet, dass der zweite Hohlraum eine Vertiefung aufweist, deren Tiefe sich zumindest in etwa senkrecht zu der zweiten Ebene erstreckt und dass die Vertiefung bei Betrachtung einer Zentralstrecke, die ausgehend von der Öffnung auf einen nächstliegenden Punkt des Verbindungsabschnitts weist, in der Breite zunimmt.

Eine solche Spritzgussform ermöglicht es, Spritzgussteile mit einem eingefärbten Granulat abzuspritzen. Ein Lackierprozess kann so vermieden werden. Es wird dabei als vorteilhaft angesehen, wenn die Öffnung bzw. der Anspritzpunkt so gesetzt ist, dass die Einspritzrichtung in einem Winkel zu der sich anschließend ausbreitenden Fließfront der thermoplastischen Schmelze steht. Der Winkel zwischen der Einspritzrichtung und der Zentralstrecke liegt bevorzugt zwischen 30° und 150°, besonders bevorzugt zwischen 60° und 120°, und insbesondere zwischen 80° und 100°. Eine vorteilhafte und besonders einfach zu realisierende Ausgestaltung ergibt sich, wenn der Winkel zwischen der Einspritzrichtung und der Zentralstrecke zumindest ungefähr 90° beträgt.

Eine der Überlegungen der vorliegenden Erfindung ist es, die Geometrie der Spritzgussform so zu gestalten, dass entlang der Zentralstrecke bzw. des Fließwegs der Fließdruck stetig abgebaut wird, um dann schließlich über die Breite des ersten Abschnitts bzw. der Tastenoberfläche eine gleichmäßige Fließfront zu erzielen. Dies wird in einer besonderen Ausgestaltung dadurch erreicht, dass der Bereich zwischen der Öffnung bzw. dem Anspritzpunkt und dem Beginn des ersten Abschnitts ausgehend von dem Verbindungsabschnitt, insbesondere dem Beginn der Tastenoberfläche, mit einer düsenartigen Geometrie ausgestaltet wird. Mit anderen Worten, man beginnt mit einer kleinen Querschnittsfläche, die sich mit fortschreitender Fließfront zunehmend bis zum Verbindungsabschnitt aufweitet, insbesondere kontinuierlich aufweitet, bis die Fließfront einen erheblichen Teil der Breite des zweiten Abschnitts am Verbindungsabschnitt, insbesondere der Breite der Tastenoberfläche, einnimmt.

Falls im Prozess doch noch sehr geringfügige Oberflächeninhomogenitäten entstehen sollten oder ein matter Oberflächenendruck gewünscht ist, wird der erste Hohlraum der Spritzgussform bevorzugt mit einer feinen Oberflächenstruktur versehen, das heißt der Designoberfläche, um Inhomogenitäten zu kaschieren und/oder den matten Oberflächeneindruck zu erzeugen. Der Winkel zwischen erster und zweiter Ebene liegt bevorzugt zwischen 30° und 150°, besonders bevorzugt zwischen 60° und 120°, insbesondere zwischen 80° und 100°. Die Spritzgussform ist besonders vorteilhaft zu realisieren, wenn der Winkel zumindest in etwa 90° beträgt.

Die Spritzgussform ist für die Herstellung eines kleinen Spritzgussteils geeignet. Sie ist aber auch für die Herstellung eines großen Spritzgussteils geeignet, wobei der Begriff "groß" jene Spritzgussteile umfasst, die nicht mehr als "klein" angesehen werden.

Jede der zuvor genannten und nachstehend genannten Ebenen kann als eine Ebene verstanden werden, die sich in einem karthesischen Koordinatensystem in zwei Richtungen ausbreitet. Die Ebenen können aber auch als Ebenen verstanden werden, die - bezogen auf ein karthesisches Koordinatensystem - gekrümmt sind und sich insbesondere als Ebene in einem ellipsoiden Koordinatensystem, einem Kugelkoordinatensystem, einem räumlichen Polarkoordinatensystem oder einem Zylinderkoordinatensystem beschreiben lassen.

Der Begriff linienförmig kann als geradlinig verstanden werden. Der Begriff linienförmig kann auch als nicht-geradlinig verstanden werden, insbesondere als gekrümmt oder geschwungen.

Bei einer vorteilhaften Ausgestaltung der Erfindung liegt die Breite der Vertiefung im Bereich der Öffnung zwischen 5 % und 45 %, bevorzugt zwischen 8% und 38 %, besonders bevorzugt zwischen 12 % und 32 % und insbesondere zwischen 15% und 25 % der Breite des zweiten Abschnitts am Verbindungsabschnitt.

Diese Ausgestaltung ermöglicht eine besonders gleichmäßige Fließfront.

Bei einer weiteren vorteilhaften Ausgestaltung der Erfindung beträgt die Breite der Vertiefung am Verbindungsabschnitt mindestens 45 %, bevorzugt mindestens 65 %, besonders bevorzugt mindestens 85 % und insbesondere mindestens 95 % der Breite des zweiten Abschnitts am Verbindungsabschnitt.

Diese Ausgestaltung ermöglicht eine besonders gleichmäßige Fließfront.

Bei einer weiteren vorteilhaften Ausgestaltung der Erfindung nimmt die Breite der Vertiefung bei Betrachtung entlang der Zentralstrecke in einem ersten Bereich der Vertiefung nahe der Öffnung geringer zu als in einem zweiten Bereich der Vertiefung, der weiter von der Öffnung entfernt ist als der erste Bereich.

Diese Ausgestaltung ermöglicht eine besonders gleichmäßige Fließfront.

Bei einer weiteren vorteilhaften Ausgestaltung der Erfindung vertieft sich die Tiefe der Vertiefung mit zunehmendem Abstand von der Zentralstrecke, insbesondere im Wesentlichen kontinuierlich und im Wesentlichen über die jeweilige Breite der Vertiefung.

Diese Ausgestaltung ermöglicht eine besonders gleichmäßige Fließfront, da unter anderem der erhöhte Fließwiderstand in den Bereichen kompensiert wird, die weiter von der Zentralstrecke entfernt liegen.

Bei einer weiteren vorteilhaften Ausgestaltung der Erfindung liegt die Vertiefung in Einspritzrichtung der Öffnung gegenüber.

Diese Ausgestaltung erzeugt eine besonders gleichmäßige Fließfront.

Bei einer weiteren vorteilhaften Ausgestaltung der Erfindung besteht keine direkte fluidmäßige Verbindung zwischen der Öffnung und dem ersten Hohlraum, sondern über den zweiten Hohlraum.

Bei dieser Ausgestaltung wird die Fließfront ausgehend von der Öffnung in dem zweiten Hohlraum erzeugt und erreicht erst danach den ersten Hohlraum. Dies führt zu einer besonders gleichmäßigen Fließfront durch den ersten Hohlraum.

Bei einer weiteren vorteilhaften Ausgestaltung der Erfindung überschreitet das Spritzgussteil in keiner Dimension eine Länge von 10 cm, bevorzugt 7 cm, besonders bevorzugt 5 cm und insbesondere von 4 cm.

Bei Spritzgussteilen dieser Größe ergibt sich eine besonders gleichmäßige Fließfront.

Bei einer weiteren vorteilhaften Ausgestaltung der Erfindung unterschreitet das Spritzgussteil in keiner Dimension eine Länge von 2 mm, bevorzugt 3 mm, besonders bevorzugt 5 mm und insbesondere von 10 mm.

Bei Spritzgussteilen dieser Größe ergibt sich eine besonders gleichmäßige Fließfront.

Bei einer weiteren vorteilhaften Ausgestaltung der Erfindung vergrößert sich die Höhe des ersten Hohlraums, die sich zumindest in etwa senkrecht zu der ersten Ebene erstreckt, entlang einer gedachten Fortsetzung der Zentralstrecke über den Verbindungsabschnitt hinaus in den ersten Hohlraum hinein.

Diese Ausgestaltung ermöglicht eine komplexere Ausgestaltung des Spritzgussteils.

Bei einer weiteren vorteilhaften Ausgestaltung der Erfindung liegt dem zweiten Hohlraum ein dritter Hohlraum für einen dritten Abschnitt des Spritzgussteils beabstandet gegenüber, wobei der erste und der dritte Hohlraum in fluidmäßiger Verbindung stehen, wobei der dritte Abschnitt ein weiteres Seitenteil des Spritzgussteils ist, sich der dritte Abschnitt zumindest im Wesentlichen in einer dritten Ebene erstreckt und die erste und die dritte Ebene in einem weiteren Winkel zueinander stehen.

Diese Ausgestaltung ist zum Fertigen von Bedientasten besonders vorteilhat. Der weitere Winkel liegt bevorzugt zwischen 30° und 150°, besonders bevorzugt zwischen 60° und 120° und insbesondere zwischen 80° und 100°. Eine besonders vorteilhafte und einfache Ausgestaltung ergibt sich, wenn der weitere Winkel zumindest in etwa 90° beträgt.

Gemäß einem zweiten Aspekt der Erfindung wird die Aufgabe gelöst durch ein Spritzgussteil, das mit einer zuvor beschriebenen Spritzgussform gefertigt ist.

Gemäß einem dritten Aspekt der Erfindung wird die Aufgabe gelöst durch ein Spritzgussteil, insbesondere die Bedientaste eines Haushaltsgeräts, mit einem ersten Abschnitt, der ein Sichtteil des Spritzgussteils ist, einem zweiten Abschnitt, der ein Seitenteil des Spritzgussteils ist, und einem zumindest teilweisen Abdruck einer Einspritzstelle von einer Öffnung einer Spritzgussform, wobei der erste und der zweite Abschnitt zumindest entlang eines linienförmigen Verbindungsabschnitts einstückig miteinander verbunden sind, wobei sich der erste Abschnitt zumindest im Wesentlichen in einer ersten Ebene erstreckt, sich der zweite Abschnitt zumindest im Wesentlichen in einer zweiten Ebene erstreckt und die erste und die zweite Ebene in einem Winkel zueinander stehen, wobei der Abdruck auf dem zweiten Abschnitt angeordnet ist, wobei der zweite Abschnitt eine Erhöhung aufweist, deren Höhe sich zumindest in etwa senkrecht zu der zweiten Ebene erstreckt und wobei die Erhöhung bei Betrachtung einer Zentralstrecke, die ausgehend von dem Abdruck auf einen nächstliegenden Punkt des Verbindungsabschnitt weist, in der Breite zunimmt.

Bei einer weiteren vorteilhaften Ausgestaltung der Erfindung liegt die Breite der Erhöhung im Bereich des Abdrucks zwischen 5 % und 45 %, bevorzugt zwischen 8 % und 38 %, besonders bevorzugt zwischen 12 % und 32 % und insbesondere zwischen 15 % und 25 % der Breite des zweiten Abschnitts am Verbindungsabschnitt.

Bei einer weiteren vorteilhaften Ausgestaltung der Erfindung beträgt die Breite der Erhöhung am Verbindungsabschnitt mindestens 45 %, bevorzugt mindestens 65 %, besonders bevorzugt mindestens 85 % und insbesondere mindestens 95 % der Breite des zweiten Abschnitts am Verbindungsabschnitt.

Bei einer weiteren vorteilhaften Ausgestaltung der Erfindung nimmt die Breite der Erhöhung bei Betrachtung entlang der Zentralstrecke in einem ersten Bereich der Erhöhung nahe des Abdrucks geringer zu als in einem zweiten Bereich der Erhöhung, der weiter von dem Abdruck entfernt ist als der erste Bereich.

Bei einer weiteren vorteilhaften Ausgestaltung der Erfindung erhöht sich die Höhe der Erhöhung mit zunehmendem Abstand von der Zentralstrecke, insbesondere im Wesentlichen kontinuierlich und im Wesentlichen über die jeweilige Breite der Erhöhung.

Bei einer weiteren vorteilhaften Ausgestaltung der Erfindung liegt die Erhöhung an einer ersten Seite des zweiten Abschnitts in Einspritzrichtung dem Abdruck gegenüber.

Bei einer weiteren vorteilhaften Ausgestaltung der Erfindung überschreitet das Spritzgussteil in keiner Dimension eine Länge von 10 cm, bevorzugt 7 cm, besonders bevorzugt 5 cm und insbesondere von 4 cm.

Bei einer weiteren vorteilhaften Ausgestaltung der Erfindung unterschreitet das Spritzgussteil in keiner Dimension eine Länge von 2 mm, bevorzugt 3 cm, besonders bevorzugt 5 mm und insbesondere von 10 mm.

Bei einer weiteren vorteilhaften Ausgestaltung der Erfindung vergrößert sich die Höhe des ersten Abschnitts, die sich zumindest in etwa senkrecht zu der ersten Ebene erstreckt, entlang einer gedachten Fortsetzung der Zentralstrecke über den Verbindungsabschnitt hinaus in den zweiten Abschnitt.

Bei einer weiteren vorteilhaften Ausgestaltung der Erfindung liegt dem zweiten Abschnitt ein dritter Abschnitt beabstandet gegenüber, wobei der dritte Abschnitt ein weiteres Seitenteil des Spritzgussteils ist, sich der dritte Abschnitt zumindest im Wesentlichen in einer dritten Ebene erstreckt und die erste und die dritte Ebene in einem weiteren Winkel zueinander stehen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Fig. 1: ein Spritzgussteil gemäß dem Stand der Technik;
- Fig. 2: ein erstes Element einer Ausführungsform einer erfindungsgemäßen Spritzgussform;
- Fig. 3: ein zweites Element einer Ausführungsform einer erfindungsgemäßen Spritzgussform;
- Fig. 4: eine erste Ausführungsform eines erfindungsgemäßen Spritzgussteils in einer ersten Ansicht;
- Fig. 5: das erfindungsgemäße Spritzgussteil gemäß Fig. 4 in einer zweiten Ansicht;
- Fig. 6: eine zweite Ausführungsform eines erfindungsgemäßen Spritzgussteils; und
- Fig. 7: eine dritte Ausführungsform eines erfindungsgemäßen Spritzgussteils.

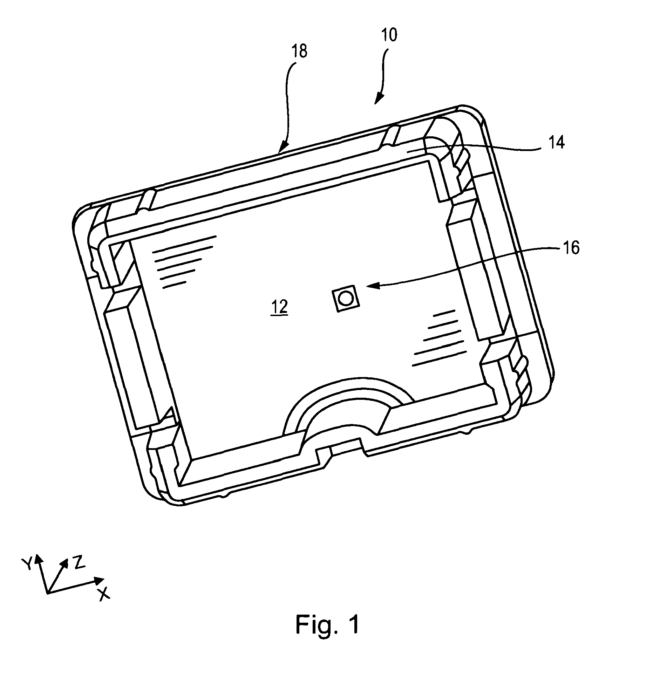

Fig. 1 zeigt ein Spritzgussteil 10 gemäß dem Stand der Technik. Das Spritzgussteil 10 weist einen ersten Abschnitt 12 auf, der ein Sichtteil des Spritzgussteils 10 ist. Ferner weist das Spritzgussteil 10 einen zweiten Abschnitt 14 auf, der ein Seitenteil des Spritzgussteils 10 ist. Ferner ist symbolisch ein Abdruck 16 einer Einspritzstelle von einer Öffnung einer Spritzgussform (nicht gezeigt) dargestellt.

Der erste und der zweite Abschnitt 12, 14 sind zumindest entlang eines linienförmigen Verbindungsabschnitts 18 einstückig miteinander verbunden.

Der erste Abschnitt 12 erstreckt sich zumindest im Wesentlichen in einer ersten Ebene XY, hier die XY-Ebene, und der zweite Abschnitt 14 erstreckt sich zumindest im Wesentlichen in einer zweiten Ebene XZ, hier die XZ-Ebene. Die erste und die zweite Ebene XY, XZ stehen in einem Winkel zueinander, der hier zumindest ungefähr 90° beträgt.

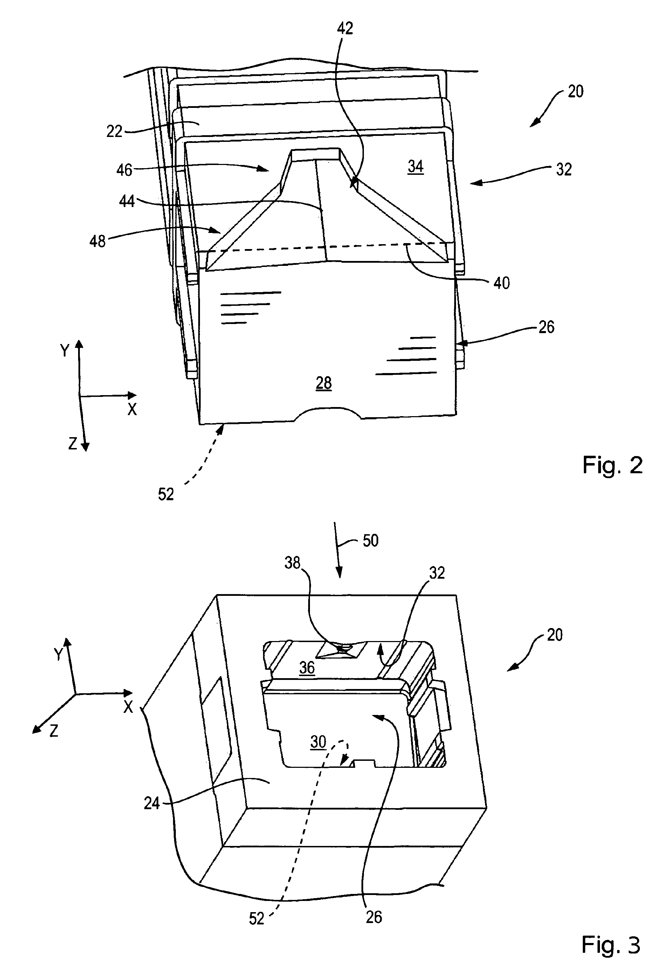

Gemäß einer bevorzugten Ausführungsform, die in den Fig. 2 und 3 gezeigt ist, besteht die Spritzgussform 20 für die Herstellung eines kleinen Spritzgussteils 10 aus einem ersten Element 22 (siehe Fig. 2) und einem zweiten Element 24 (siehe Fig. 3). Die Spritzgussform 20 wird nun anhand dieser Figuren erläutert.

Die Spritzgussform 20 weist einen ersten Hohlraum 26 für den ersten Abschnitt 12 des Spritzgussteils 10 auf. Der Hohlraum 26 wird dadurch gebildet, dass zwischen der Abschlussfläche 28 des ersten Elements 22 und dem Boden 30 des zweiten Elements 24 ein Abstand bestehen bleibt, wenn das erste Element 22 in das zweite Element 24 eingesetzt wird.

Die Spritzgussform 20 hat außerdem einen zweiten Hohlraum 32, der sich durch einen Abstand zwischen der seitlichen Abschlussfläche 34 des ersten Elements 22 und der Seitenwand 36 des zweiten Elements 24 ergibt.

Außerdem ist eine Öffnung 38 zum Einspritzen von Kunststoff bzw. thermoplastischer Masse gezeigt. Der erste und der zweite Hohlraum 26, 32 stehen zumindest entlang eines linienförmigen Verbindungsabschnitts 18, symbolisiert durch eine gestrichelte Linie 40, in Verbindung.

Der erste Abschnitt 12 bildet ein Sichtteil des Spritzgussteils 10, und der zweite Abschnitt 14 bildet ein Seitenteil des Spritzgussteils 10. Der erste Abschnitt 12 bzw. der erste Hohlraum 26 erstrecken sich zumindest im Wesentlichen in einer ersten Ebene XY, hier die XY-Ebene, und der zweite Abschnitt 14 bzw. der zweite Hohlraum 32 erstrecken sich zumindest im Wesentlichen in einer zweiten Ebene XZ, hier die XZ-Ebene. Die erste und die zweite Ebene XY, XZ stehen in einem Winkel zueinander.

Die Öffnung 38 mündet in den zweiten Hohlraum 32. Der zweite Hohlraum 32 weist außerdem eine Vertiefung 42 auf, deren Tiefe, hier in Y-Richtung, zumindest in etwa senkrecht zu der zweiten Ebene XZ steht. Die Vertiefung 42 nimmt in der Breite, hier in X-Richtung, zu, wenn man dies entlang einer Zentralstrecke 44 betrachtet. Die Zentralstrecke 44 ist gebildet ausgehend von der Öffnung 38 und auf einen nächstliegenden Punkt des Verbindungsabschnitts 18 gerichtet.

Die Breite der Vertiefung 42 nimmt bei Betrachtung entlang der Zentralstrecke 44 in einem ersten Bereich 46 der Vertiefung 42 nahe der Öffnung 38 geringer zu als in einem zweiten Bereich 48 der Vertiefung 42, der weiter von der Öffnung 38 entfernt ist als der erste Bereich 46.

Die Tiefe der Vertiefung 42 vertieft sich mit zunehmendem Abstand von der Zentralstrecke 44, insbesondere im Wesentlichen kontinuierlich und im Wesentlichen über die jeweilige Breite der Vertiefung 42. Die Vertiefung 42 liegt in Einspritzrichtung 50 der Öffnung 38 gegenüber, ist aber, wie gezeigt, nicht auf diesen Bereich beschränkt.

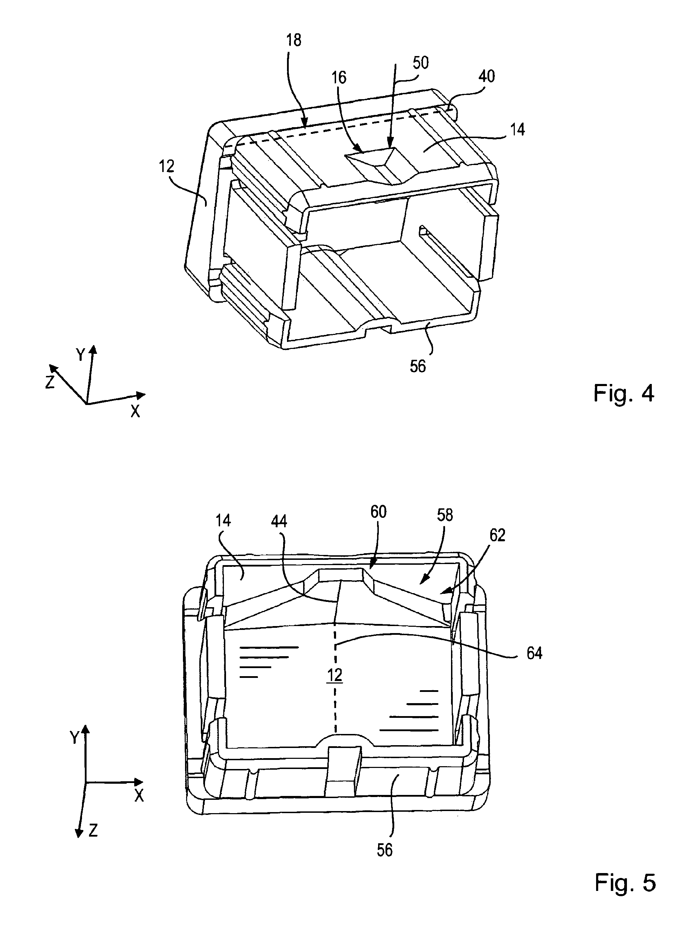

Dem zweiten Hohlraum 32 liegt beabstandet ein dritter Hohlraum für einen dritten Abschnitt 54 des Spritzgussteils 10 gegenüber. Der erste und der dritte Hohlraum stehen in fluidmäßiger Verbindung, wobei der dritte Abschnitt 54 ein weiteres Seitenteil 56 (siehe Fig. 4) des Spritzgussteils 10 ist. Der dritte Abschnitt 54 erstreckt sich zumindest im Wesentlichen in einer dritten Ebene XZ', hier die XZ-Ebene, und die erste und die dritte Ebene XY, XZ' stehen in einem weiteren Winkel zueinander.

Fig. 4 zeigt eine erste Ausführungsform eines Spritzgussteils 10, hier eine Bedientaste eines Haushaltsgeräts. Das Spritzgussteil 10 weist einen ersten Abschnitt 12, der ein Sichtteil des Spritzgussteils 10 ist, einen zweiten Abschnitt 14, der ein Seitenteil des Spritzgussteils 10 ist, und einen zumindest teilweisen Abdruck 16 einer Einspritzstelle von einer Öffnung 38 einer Spritzgussform 20 auf.

Der erste und der zweite Abschnitt 12, 14 sind zumindest entlang eines linienförmigen Verbindungsabschnitts 18, außerdem veranschaulicht durch die gestrichelte Linie 40, einstückig miteinander verbunden. Der erste Abschnitt 12 erstreckt sich zumindest im Wesentlichen in einer ersten Ebene XY, hier die XY-Ebene, der zweite Abschnitt 14 erstreckt sich zumindest im Wesentlichen in einer zweiten Ebene XZ, hier die XZ-Ebene, und die erste und die zweite Ebene XY, XZ stehen in einem Winkel zueinander.

Der Abdruck 16 ist auf dem zweiten Abschnitt 14 angeordnet. Der zweite Abschnitt 14 weist eine Erhöhung 58 (siehe Fig. 5) auf, deren Höhe sich zumindest in etwa senkrecht zu der zweiten Ebene XZ erstreckt. Die Erhöhung 58 nimmt bei Betrachtung der Zentralstrecke 44 in der Breite zu, wobei die Zentralstrecke 44 auch hier ausgehend von dem Abdruck 16 auf einen nächstliegenden Punkt des Verbindungsabschnitts 18 weist.

In Fig. 5 ist zu erkennen, dass die Breite der Erhöhung 58 bei Betrachtung entlang der Zentralstrecke 44 in einem ersten Bereich 60 der Erhöhung 58 nahe des Abdrucks 16 geringer zunimmt als in einem zweiten Bereich 62 der Erhöhung 58, der weiter von dem Abdruck 16 entfernt ist als der erste Bereich 60. Es ist ferner zu erkennen, dass sich die Höhe der Erhöhung 58 mit zunehmendem Abstand von der Zentralstrecke 44 erhöht, insbesondere im Wesentlichen kontinuierlich und im Wesentlichen über die jeweilige Breite der Erhöhung 58. Die Erhöhung 58 liegt an einer ersten Seite des zweiten Abschnitts 14 in Einspritzrichtung 50 dem Abdruck 16 gegenüber.

Die Höhe des ersten Abschnitts 12, der sich zumindest in etwa senkrecht zu der ersten Ebene XY erstreckt, vergrößert sich entlang einer gedachten Fortsetzung der Zentralstrecke 44 über den Verbindungsabschnitt 18 hinaus in den ersten Abschnitt 12 - symbolisiert durch die gestrichelte Linie 64.

Dem zweiten Abschnitt 14 liegt ein dritter Abschnitt 56 beabstandet gegenüber, wobei der dritte Abschnitt 56 ein weiteres Seitenteil des Spritzgussteils 10 ist, sich der dritte Abschnitt 56 zumindest im Wesentlichen in einer dritten Ebene XZ', hier die XZ-Ebene, erstreckt und die erste und die dritte Ebene XY, XZ' in einem weiteren Winkel zueinander stehen.

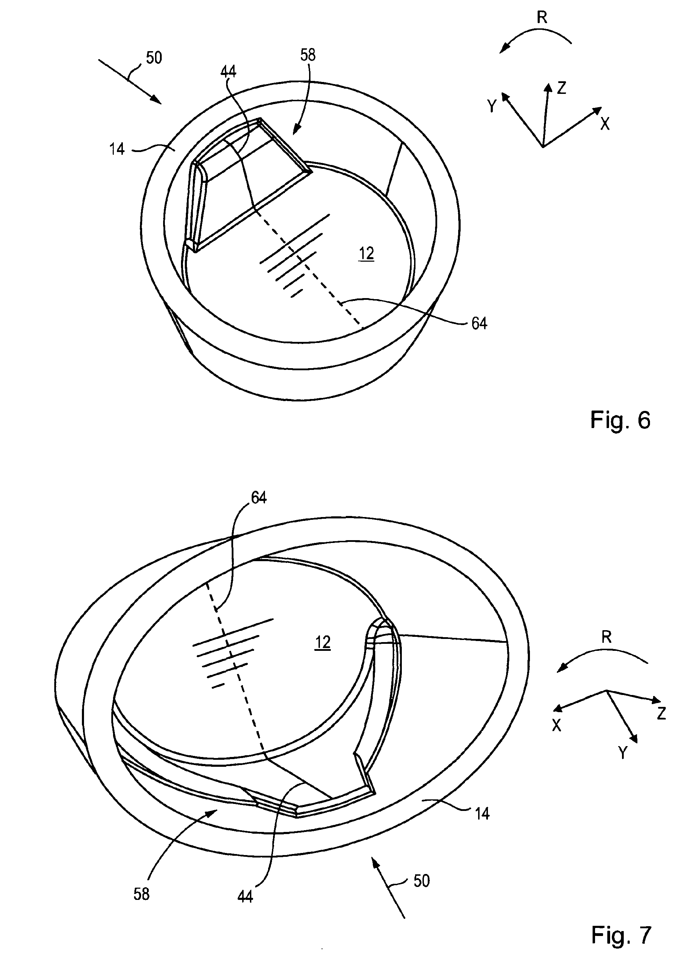

Fig. 6 zeigt eine zweite Ausführungsform eines Spritzgussteils 10, hier wieder eine Bedientaste eines Haushaltsgeräts. Das Spritzgussteil 10 weist einen ersten Abschnitt 12, der ein Sichtteil des Spritzgussteils 10 ist, einen zweiten Abschnitt 14, der ein Seitenteil des Spritzgussteils 10 ist.

Der erste Abschnitt 12 erstreckt sich zumindest im Wesentlichen in einer ersten Ebene XY. Die erste Ebene XY kann sich sowohl als Ebene eines karthesischen Koordinatensystems als auch, wie eingangs erläutert, als Ebene in einem anderen Koordinatensystem erstrecken, also auch gekrümmt sein. Der zweite Abschnitt 14 erstreckt sich zumindest im Wesentlichen in einer zweiten Ebene RZ. Die zweite Ebene RZ wird hier von der Z-Achse und einer Krümmung R un d die Z-Achse herum aufgeführt. Die zweite Ebene RZ liegt hier in einer Mantelebene eines Kreiszylinders. Die erste und die zweite Ebene XY, RZ stehen in einem Winkel zueinander.

Bezüglich der weiteren Erläuterungen wird auf die Figuren 4 und 5 verwiesen. Die gezeigte zweite Ausführungsform des Spritzgussteils 10 offenbart unmittelbar auch eine entsprechende Spritzgussform 20, da diese das Negativ des Spritzgussteils 10 darstellt. So ist die Vertiefung 42 der entsprechenden Spritzgussform 20 das Negativ der Erhöhung 58 des Spritzgussteils 10. Der erste Abschnitt 12 der entsprechenden Spritzgussform 20 ist das Negativ der ersten Hohlraums 26 des Spritzgussteils 10. Der zweite Abschnitt 12 der entsprechenden Spritzgussform 20 ist das Negativ des zweiten Hohlraums 26 des Spritzgussteils 10. Der Abdruck einer Einspritzstelle von einer Öffnung einer Spritzgussform 20, siehe Fig. 4, ist hier verdeckt.

Fig. 7 zeigt eine dritte Ausführungsform eines Spritzgussteils 10, die sich von der zweiten Ausführungsform dadurch unterscheidet, dass die Ebene RZ hier in einer Mantelebene eines Zylinders liegt, der eine elliptische Grundfläche hat. Im Weiteren gelten auch hier die Erläuterungen zur Fig. 6.

Zusammengefasst werden insbesondere die Aspekte der folgenden Klauseln offenbart, bei denen es sich nicht um Ansprüche, sondern um einen Teil der Beschreibung handelt:
(1) Spritzgussform für die Herstellung eines Spritzgussteils, insbesondere für die Herstellung einer Bedientaste eines Haushaltsgeräts, wobei die Spritzgussform einen ersten Hohlraum für einen ersten Abschnitt des Spritzgussteils, einen zweiten Hohlraum für einen zweiten Abschnitt des Spritzgussteils und eine Öffnung zum Einspritzen von Kunststoff aufweist, wobei der erste und der zweite Hohlraum zumindest entlang eines linienförmigen Verbindungsabschnitts in fluidmäßiger Verbindung stehen, wobei der erste Abschnitt ein Sichtteil des Spritzgussteils ist und der zweite Abschnitt ein Seitenteil des Spritzgussteils ist, wobei sich der erste Abschnitt zumindest im Wesentlichen in einer ersten Ebene erstreckt, sich der zweite Abschnitt zumindest im Wesentlichen in einer zweiten Ebene erstreckt und die erste und die zweite Ebene in einem Winkel zueinander stehen, dadurch gekennzeichnet, dass die Öffnung in den zweiten Hohlraum mündet, dass der zweite Hohlraum eine Vertiefung aufweist, deren Tiefe sich zumindest in etwa senkrecht zu der zweiten Ebene erstreckt und dass die Vertiefung bei Betrachtung einer Zentralstrecke, die ausgehend von der Öffnung auf einen nächstliegenden Punkt des Verbindungsabschnitts weist, in der Breite zunimmt.
(2) Spritzgussform nach Klausel 1, wobei die Breite der Vertiefung im Bereich der Öffnung zwischen 5 % und 45 %, bevorzugt zwischen 8 % und 38 %, besonders bevorzugt zwischen 12 % und 32 % und insbesondere zwischen 15 % und 25 % der Breite des zweiten Abschnitts am Verbindungsabschnitt liegt.
(3) Spritzgussform nach einer der vorhergehenden Klauseln, wobei die Breite der Vertiefung am Verbindungsabschnitt mindestens 45 %, bevorzugt mindestens 65 %, besonders bevorzugt mindestens 85 % und insbesondere mindestens 95 % der Breite des zweiten Abschnitts am Verbindungsabschnitt beträgt.
(4) Spritzgussform nach einer der vorhergehenden Klauseln, wobei die Breite der Vertiefung bei Betrachtung entlang der Zentralstrecke in einem ersten Bereich der Vertiefung nahe der Öffnung geringer zunimmt als in einem zweiten Bereich der Vertiefung, der weiter von der Öffnung entfernt ist als der erste Bereich.
(5) Spritzgussform nach einer der vorhergehenden Klauseln, wobei sich die Tiefe der Vertiefung mit zunehmendem Abstand von der Zentralstrecke vertieft, insbesondere im Wesentlichen kontinuierlich und im Wesentlichen über die jeweilige Breite der Vertiefung.
(6) Spritzgussform nach einer der vorhergehenden Klauseln, wobei die Vertiefung in Einspritzrichtung der Öffnung gegenüberliegt.
(7) Spritzgussform nach einer der vorhergehenden Klauseln, wobei keine direkte fluidmäßige Verbindung zwischen der Öffnung und dem ersten Hohlraum besteht, sondern über den zweiten Hohlraum.
(8) Spritzgussform nach einer der vorhergehenden Klauseln, wobei das Spritzgussteil in keiner Dimension eine Länge von 10 cm, bevorzugt 7 cm, besonders bevorzugt 5 cm und insbesondere von 4 cm überschreitet.
(9) Spritzgussform nach einer der vorhergehenden Klauseln, wobei das Spritzgussteil in keiner Dimension eine Länge von 2 mm, bevorzugt 3 mm, besonders bevorzugt 5 mm und insbesondere von 10 mm unterschreitet.
(10) Spritzgussform nach einer der vorhergehenden Klauseln, wobei sich die Höhe des ersten Hohlraums, die sich zumindest in etwa senkrecht zu der ersten Ebene erstreckt, entlang einer gedachten Fortsetzung der Zentralstrecke über den Verbindungsabschnitt hinaus in den ersten Hohlraum hinein vergrößert.
(11) Spritzgussform nach einer der vorhergehenden Klauseln, wobei dem zweiten Hohlraum ein dritter Hohlraum für einen dritten Abschnitt des Spritzgussteils beabstandet gegenüberliegt, wobei der erste und der dritte Hohlraum in fluidmäßiger Verbindung stehen, wobei der dritte Abschnitt ein weiteres Seitenteil des Spritzgussteils ist, sich der dritte Abschnitt zumindest im Wesentlichen in einer dritten Ebene erstreckt und die erste und die dritte Ebene in einem weiteren Winkel zueinander stehen.
(12) Spritzgussteil gefertigt mit einer Spritzgussform nach einer der vorhergehenden Klauseln.
(13) Spritzgussteil, insbesondere Bedientaste eines Haushaltsgeräts, mit einem ersten Abschnitt, der ein Sichtteil des Spritzgussteils ist, einem zweiten Abschnitt, der ein Seitenteil des Spritzgussteils ist, und einem zumindest teilweisen Abdruck einer Einspritzstelle von einer Öffnung einer Spritzgussform, wobei der erste und der zweite Abschnitt zumindest entlang eines linienförmigen Verbindungsabschnitts einstückig miteinander verbunden sind, wobei sich der erste Abschnitt zumindest im Wesentlichen in einer ersten Ebene erstreckt, sich der zweite Abschnitt zumindest im Wesentlichen in einer zweiten Ebene erstreckt und die erste und die zweite Ebene in einem Winkel zueinander stehen, dadurch gekennzeichnet, dass der Abdruck auf dem zweiten Abschnitt angeordnet ist, dass der zweite Abschnitt eine Erhöhung aufweist, deren Höhe sich zumindest in etwa senkrecht zu der zweiten Ebene erstreckt und dass die Erhöhung bei Betrachtung einer Zentralstrecke, die ausgehend von dem Abdruck auf einen nächstliegenden Punkt des Verbindungsabschnitts weist, in der Breite zunimmt.
(14) Spritzgussteil nach Klausel 13, wobei die Breite der Erhöhung im Bereich des Abdrucks zwischen 5 % und 45 %, bevorzugt zwischen 8 % und 38 %, besonders bevorzugt zwischen 12 % und 32 % und insbesondere zwischen 15 % und 25 % der Breite des zweiten Abschnitts am Verbindungsabschnitt liegt.
(15) Spritzgussteil nach einer der vorhergehenden Klauseln, wobei die Breite der Erhöhung am Verbindungsabschnitt mindestens 45 %, bevorzugt mindestens 65 %, besonders bevorzugt mindestens 85 % und insbesondere mindestens 95 % der Breite des zweiten Abschnitts am Verbindungsabschnitt beträgt.
(16) Spritzgussteil nach einer der vorhergehenden Klauseln, wobei die Breite der Erhöhung bei Betrachtung entlang der Zentralstrecke in einem ersten Bereich der Erhöhung nahe des Abdrucks geringer zunimmt als in einem zweiten Bereich der Erhöhung, der weiter von dem Abdruck entfernt ist als der erste Bereich.
(17) Spritzgussteil nach einer der vorhergehenden Klauseln, wobei sich die Höhe der Erhöhung mit zunehmendem Abstand von der Zentralstrecke erhöht, insbesondere im Wesentlichen kontinuierlich und im Wesentlichen über die jeweilige Breite der Erhöhung.
(18) Spritzgussteil nach einer der vorhergehenden Klauseln, wobei die Erhöhung an einer ersten Seite des zweiten Abschnitts in Einspritzrichtung dem Abdruck gegenüberliegt.
(19) Spritzgussteil nach einer der vorhergehenden Klauseln, wobei das Spritzgussteil in keiner Dimension eine Länge von 10 cm, bevorzugt 7 cm, besonders bevorzugt 5 cm und insbesondere von 4 cm überschreitet.
(20) Spritzgussteil nach einer der vorhergehenden Klauseln, wobei das Spritzgussteil in keiner Dimension eine Länge von 2 mm, bevorzugt 3 cm, besonders bevorzugt 5 mm und insbesondere von 10 mm unterschreitet.
(21) Spritzgussteil nach einer der vorhergehenden Klauseln, wobei sich die Höhe des ersten Abschnitts, die sich zumindest in etwa senkrecht zu der ersten Ebene erstreckt, entlang einer gedachten Fortsetzung der Zentralstrecke über den Verbindungsabschnitt hinaus in den ersten Abschnitt vergrößert.
(22) Spritzgussteil nach einer der vorhergehenden Klauseln, wobei dem zweiten Abschnitt ein dritter Abschnitt beabstandet gegenüberliegt, wobei der dritte Abschnitt ein weiteres Seitenteil des Spritzgussteils ist, sich der dritte Abschnitt zumindest im Wesentlichen in einer dritten Ebene erstreckt und die erste und die dritte Ebene in einem weiteren Winkel zueinander stehen.

## Patentansprüche

1. Spritzgussform (20) für die Herstellung eines Spritzgussteils (10), insbesondere für die Herstellung einer Bedientaste eines Haushaltsgeräts, wobei die Spritzgussform (20) einen ersten Hohlraum (26) für einen ersten Abschnitt (12) des Spritzgussteils (10), einen zweiten Hohlraum (32) für einen zweiten Abschnitt (14) des Spritzgussteils (10) und eine Öffnung (38) zum Einspritzen von Kunststoff aufweist, wobei der erste und der zweite Hohlraum (26, 32) zumindest entlang eines linienförmigen Verbindungsabschnitts (18) in fluidmäßiger Verbindung stehen, wobei der erste Abschnitt (12) ein Sichtteil des Spritzgussteils (10) ist und der zweite Abschnitt (14) ein Seitenteil des Spritzgussteils (10) ist, wobei sich der erste Abschnitt (12) zumindest im Wesentlichen in einer ersten Ebene (XY) erstreckt, sich der zweite Abschnitt (14) zumindest im Wesentlichen in einer zweiten Ebene (XZ; RZ) erstreckt und die erste und die zweite Ebene (XY, XZ; RZ) in einem Winkel zueinander stehen, wobei die Öffnung (38) in den zweiten Hohlraum (32) mündet und der zweite Hohlraum (32) eine Vertiefung (42) aufweist, deren Tiefe sich zumindest in etwa senkrecht zu der zweiten Ebene (XZ; RZ) erstreckt, **dadurch gekennzeichnet, dass** die Vertiefung (42) bei Betrachtung einer Zentralstrecke (44), die ausgehend von der Öffnung (38) auf einen nächstliegenden Punkt des Verbindungsabschnitts (18) weist, in der Breite zunimmt.

2. Spritzgussform nach Anspruch 1, wobei die Breite der Vertiefung (42) im Bereich der Öffnung (38) zwischen 5 % und 45 %, bevorzugt zwischen 8 % und 38 %, besonders bevorzugt zwischen 12 % und 32 % und insbesondere zwischen 15 % und 25 % der Breite des zweiten Abschnitts (14) am Verbindungsabschnitt (18) liegt.

3. Spritzgussform nach einem der vorhergehenden Ansprüche, wobei die Breite der Vertiefung (42) am Verbindungsabschnitt (18) mindestens 45 %, bevorzugt mindestens 65 %, besonders bevorzugt mindestens 85 % und insbesondere mindestens 95 % der Breite des zweiten Abschnitts (14) am Verbindungsabschnitt (18) beträgt.

4. Spritzgussform nach einem der vorhergehenden Ansprüche, wobei die Breite der Vertiefung (42) bei Betrachtung entlang der Zentralstrecke (44) in einem ersten Bereich (46) der Vertiefung nahe der Öffnung (38) geringer zunimmt als in einem zweiten Bereich (48) der Vertiefung (42), der weiter von der Öffnung (38) entfernt ist als der erste Bereich (46).

5. Spritzgussform nach einem der vorhergehenden Ansprüche, wobei sich die Tiefe der Vertiefung (42) mit zunehmendem Abstand von der Zentralstrecke (44) vertieft, insbesondere im Wesentlichen kontinuierlich und im Wesentlichen über die jeweilige Breite der Vertiefung (42).

6. Spritzgussform nach einem der vorhergehenden Ansprüche, wobei die Vertiefung (42) in Einspritzrichtung (50) der Öffnung (38) gegenüberliegt.

7. Spritzgussform nach einem der vorhergehenden Ansprüche, wobei keine direkte fluidmäßige Verbindung zwischen der Öffnung (38) und dem ersten Hohlraum (26) besteht, sondern über den zweiten Hohlraum (32).

8. Spritzgussform nach einem der vorhergehenden Ansprüche, wobei sich die Höhe des ersten Hohlraums (26), die sich zumindest in etwa senkrecht zu der ersten Ebene (XY) erstreckt, entlang einer gedachten Fortsetzung der Zentralstrecke (44) über den Verbindungsabschnitt (18) hinaus in den ersten Hohlraum (26) hinein vergrößert.

9. Spritzgussform nach einem der vorhergehenden Ansprüche, wobei dem zweiten Hohlraum (32) ein dritter Hohlraum (52) für einen dritten Abschnitt (54) des Spritzgussteils (10) beabstandet gegenüberliegt, wobei der erste und der dritte Hohlraum (32, 52) in fluidmäßiger Verbindung stehen, wobei der dritte Abschnitt (54) ein weiteres Seitenteil (56) des Spritzgussteils (10) ist, sich der dritte Abschnitt (54) zumindest im Wesentlichen in einer dritten Ebene (XZ') erstreckt und die erste und die dritte Ebene (XY, XZ') in einem weiteren Winkel zueinander stehen.

10. Spritzgussteil (10), insbesondere Bedientaste eines Haushaltsgeräts, mit einem ersten Abschnitt (12), der ein Sichtteil des Spritzgussteils (10) ist, einem zweiten Abschnitt (14), der ein Seitenteil des Spritzgussteils (10) ist, und einem zumindest teilweisen Abdruck einer Einspritzstelle von einer Öffnung (38) einer Spritzgussform (20), wobei der erste und der zweite Abschnitt (12, 14) zumindest entlang eines linienförmigen Verbindungsabschnitts (18) einstückig miteinander verbunden sind, wobei sich der erste Abschnitt (12) zumindest im Wesentlichen in einer ersten Ebene (XY) erstreckt, sich der zweite Abschnitt (14) zumindest im Wesentlichen in einer zweiten Ebene (XZ; RZ) erstreckt und die erste und die zweite Ebene (XY, XZ; RZ) in einem Winkel zueinander stehen, wobei der Abdruck (16) auf dem zweiten Abschnitt (14) angeordnet ist und der zweite Abschnitt (14) eine Erhöhung (58) aufweist, deren Höhe sich zumindest in etwa senkrecht zu der zweiten Ebene (XZ; RZ) erstreckt, **dadurch gekennzeichnet, dass** die Erhöhung (58) bei Betrachtung einer Zentralstrecke (44), die ausgehend von dem Abdruck (16) auf einen nächstliegenden Punkt des Verbindungsabschnitts (18) weist, in der Breite zunimmt.

11. Spritzgussteil nach einem der vorhergehenden Ansprüche, wobei die Breite der Erhöhung (58) bei Betrachtung entlang der Zentralstrecke (44) in einem ersten Bereich (60) der Erhöhung (58) nahe des Abdrucks (16) geringer zunimmt als in einem zweiten Bereich (62) der Erhöhung (58), der weiter von dem Abdruck (16) entfernt ist als der erste Bereich (60).

12. Spritzgussteil nach einem der vorhergehenden Ansprüche, wobei sich die Höhe der Erhöhung (58) mit zunehmendem Abstand von der Zentralstrecke (44) erhöht, insbesondere im Wesentlichen kontinuierlich und im Wesentlichen über die jeweilige Breite der Erhöhung (58).

13. Spritzgussteil nach einem der vorhergehenden Ansprüche, wobei die Erhöhung (58) an einer ersten Seite des zweiten Abschnitts (14) in Einspritzrichtung (50) dem Abdruck (16) gegenüberliegt.

14. Spritzgussteil nach einem der vorhergehenden Ansprüche, wobei sich die Höhe des ersten Abschnitts (12), die sich zumindest in etwa senkrecht zu der ersten Ebene (XY) erstreckt, entlang einer gedachten Fortsetzung der Zentralstrecke (44) über den Verbindungsabschnitt (18) hinaus in den ersten Abschnitt (12) vergrößert.

## Claims

1. Injection-mold form (20) for the manufacturing of an injection-molded part (10), in particular for the manufacturing of an operating button of a household appliance, wherein the injection-mold form (20) comprises a first cavity (26) for a first section (12) of the injection-molded part (10), a second cavity (32) for a second section (14) of the injection-molded part (10), and an opening (38) for injecting plastic, wherein the first and the second cavity (26, 32) are in fluidwise connection at least along a line-shaped connecting section (18), wherein the first section (12) is a user-facing part of the injection-molded part (10) and the second section (14) is a side part of the injection-molded part (10), wherein the first section (12) extends at least substantially in a first plane (XY), the second section (14) extends at least substantially in a second plane (XZ; RZ), and the first and second planes (XY, XZ; RZ) are at an angle to one another, wherein the opening (38) opens into the second cavity (32), and the second cavity (32) comprises a recess (42) which depth extends at least approximately perpendicular to the second plane (XZ; RZ), **characterized in that** the recess (42) increases in width when considering a central line (44) which is directed from the opening (38) to a nearest point on the connecting section (18).

2. Injection-mold form according to claim 1, wherein the width of the recess (42) in the area of the opening (38) is between 5 % and 45 %, preferably between 8 % and 38 %, more preferably between 12 % and 32 % and in particular between 15 % and 25 % of the width of the second section (14) at the connecting section (18).

3. Injection-mold form according to any preceding claim, wherein the width of the recess (42) at the connecting section (18) is at least 45 %, preferably at least 65 %, more preferably at least 85 % and in particular at least 95 % of the width of the second section (14) at the connecting section (18).

4. Injection-mold form according to any preceding claim, wherein the width of the recess (42) increases to a lesser degree in a first section (46) of the recess close to the opening (38) than in a second area (48) of the recess (42) which is further away from the opening (38) than the first area (46) when considered along the central line (44).

5. Injection-mold form according to any preceding claim, wherein the depth of the recess (42) increases with increasing distance from the central line (44), preferably in a substantially continuous manner and substantially over the respective width of the recess (42).

6. Injection-mold form according to any preceding claim, wherein the recess (42) faces the opening (38) in an injection direction (50).

7. Injection-mold form according to any preceding claim, wherein no direct fluidwise connection is given between the opening (38) and the first cavity (26), but via the second cavity (32).

8. Injection-mold form according to any preceding claim, wherein the height of the first cavity (26) which extends at least approximately perpendicular to the first plane (XY), increases along a virtual continuation of the central line (44) beyond the connecting section (18) into the first cavity (26).

9. Injection-mold form according to any preceding claim, wherein a third cavity (52) for a third section (54) of the injection-molded part (10) is facing and at a distance from the second cavity (32), wherein the first and the third cavity (32, 52) are in fluidwise connection, wherein the third section (54) is a further side part (56) of the injection-molded part (10), the third section (54) extends at least substantially in a third plane (XZ'), and the first and the third plane (XY, XZ') are at an angle to one another.

10. Injection-molded part (10), in particular an operating button of a household appliance, comprising a first section (12) being a user-facing part of the injection-molded part (10), a second section (14) being a side part of the injection-molded part (10), and an at least a partial imprint of an injection site of an opening (38) of an injection-mold form (20), wherein the first and the second section (12, 14) are connected with each other at least along a line-shaped connecting section (18), wherein the first section (12) extends at least substantially in a first plane (XY), the second section (14) extends at least substantially in a second plane (XZ; RZ), and the first and second planes (XY, XZ; RZ) are at an angle to one another, wherein the imprint (16) is located on the second section (14) and the second section (14) comprises a heightening (58) which height extends at least approximately perpendicular to the second plane (XZ; RZ), **characterized in that** the heightening (58) increases in width when considering a central line (44) which is directed from the imprint (16) to a nearest point on the connecting section (18).

11. Injection-molded part according to any preceding claim, wherein the width of the heightening (58) increases to a lesser degree in a first area (60) of the heightening (58) near the imprint (16) than in a second area (62) of the heightening (58) which is further away from the imprint (16) than the first area (60) when considered along the central line (44).

12. Injection-molded part according to any preceding claim, wherein the height of the heightening (58) increases with increasing distance from the central line (44), in particular in a substantially continuous manner and substantially over the respective width of the heightening (58).

13. Injection-molded part according to any preceding claim, wherein the heightening (58) faces the imprint (16) at a first side of the second section (14) in an injection direction (50).

14. Injection-molded part according to any preceding claim, wherein the height of the first section (12), the height being at least approximately perpendicular to the first plane (XY), increases along a virtual continuation of the central line (44) beyond the connecting section (18) into the first section (12).

## Revendications

1. Moule pour injection (20) pour la fabrication d'une pièce moulée par injection (10), en particulier pour la fabrication d'une touche de commande d'un appareil ménager, le moule pour injection (20) présentant une première cavité (26) pour une première portion (12) de la pièce moulée par injection (10), une deuxième cavité (32) pour une deuxième portion (14) de la pièce moulée par injection (10) et une ouverture (38) pour l'injection de matière plastique, la première et la deuxième cavité (26, 32) étant en liaison fluidique au moins le long d'une portion de liaison linéaire (18), la première portion (12) étant une partie visible de la pièce moulée par injection (10) et la deuxième portion (14) étant une partie latérale de la pièce moulée par injection (10), la première portion (12) s'étendant au moins essentiellement dans un premier plan (XY), la deuxième portion (14) s'étendant au moins essentiellement dans un deuxième plan (XZ ; RZ) et le premier et le deuxième plan (XY, XZ ; RZ) étant orientés suivant un angle l'un par rapport à l'autre, l'ouverture (38) débouchant dans la deuxième cavité (32) et la deuxième cavité (32) présentant un renfoncement (42) dont la profondeur s'étend au moins approximativement perpendiculairement au deuxième plan (XZ ; RZ), **caractérisé en ce que** le renfoncement (42), en observant une étendue centrale (44) qui est tournée à partir de l'ouverture (38) vers un point le plus proche de la portion de liaison (18), augmente de largeur.

2. Moule pour injection selon la revendication 1, dans lequel la largeur du renfoncement (42) dans la région de l'ouverture (38) est comprise entre 5 % et 45 %, de préférence entre 8 % et 38 %, particulièrement préférablement entre 12 % et 32 % et notamment entre 15 % et 25 % de la largeur de la deuxième portion (14) au niveau de la portion de liaison (18).

3. Moule pour injection selon l'une quelconque des revendications précédentes, dans lequel la largeur du renfoncement (42) au niveau de la portion de liaison (18) vaut au moins 45 %, de préférence au moins 65 %, particulièrement préférablement au moins 85 % et notamment au moins 95 % de la largeur de la deuxième portion (14) au niveau de la portion de liaison (18).

4. Moule pour injection selon l'une quelconque des revendications précédentes, dans lequel la largeur du renfoncement (42), en observant le long de l'étendue centrale (44) dans une première région (46) du renfoncement à proximité de l'ouverture (38), augmente plus faiblement que dans une deuxième région (48) du renfoncement (42) qui est plus éloignée de l'ouverture (38) que la première région (46).

5. Moule pour injection selon l'une quelconque des revendications précédentes, dans lequel la profondeur du renfoncement (42) devient plus profonde en s'éloignant de l'étendue centrale (44), en particulier essentiellement en continu et essentiellement sur la largeur respective du renfoncement (42).

6. Moule pour injection selon l'une quelconque des revendications précédentes, dans lequel le renfoncement (42) dans la direction d'injection (50) est opposé à l'ouverture (38).

7. Moule pour injection selon l'une quelconque des revendications précédentes, dans lequel il n'existe aucune liaison fluidique directe entre l'ouverture (38) et la première cavité (26) mais par le biais de la deuxième cavité (32).

8. Moule pour injection selon l'une quelconque des revendications précédentes, dans lequel la hauteur de la première cavité (26) qui s'étend au moins approximativement perpendiculairement au premier plan (XY), le long d'un prolongement imaginaire de l'étendue centrale (44), augmente au-delà de la portion de liaison (18) jusque dans la première cavité (26).

9. Moule pour injection selon l'une quelconque des revendications précédentes, dans lequel une troisième cavité (52) pour une troisième portion (54) de la pièce moulée par injection (10) est opposée à la deuxième cavité (32) à distance de celle-ci, la première et la troisième cavité (32, 52) étant en liaison fluidique, la troisième portion (54) étant une partie latérale supplémentaire (56) de la pièce moulée par injection (10), la troisième portion (54) s'étendant au moins essentiellement dans un troisième plan (XZ') et le premier et le troisième plan (XY, XZ') étant orientés suivant un angle supplémentaire l'un par rapport à l'autre.

10. Pièce moulée par injection (10), en particulier touche de commande d'un appareil ménager, comprenant une première portion (12) qui est une partie visible de la pièce moulée par injection (10), une deuxième portion (14) qui est une partie latérale de la pièce moulée par injection (10), et une empreinte au moins partielle d'une zone d'injection d'une ouverture (38) d'un moule d'injection (20), la première et la deuxième portion (12, 14) étant connectées l'une à l'autre d'une seule pièce au moins le long d'une portion de liaison linéaire (18), la première portion (12) s'étendant au moins essentiellement dans un premier plan (XY), la deuxième portion (14) s'étendant au moins essentiellement dans un deuxième plan (XZ ; RZ) et le premier et le deuxième plan (XY, XZ ; RZ) étant orientés suivant un certain angle l'un par rapport à l'autre, l'empreinte (16) étant prévue sur la deuxième portion (14) et la deuxième portion (14) présentant un rehaussement (58) dont la hauteur s'étend au moins approximativement perpendiculairement au deuxième plan (XZ ; RZ), **caractérisée en ce que** le rehaussement (58), en observant une étendue centrale (44) qui est tournée à partir de l'empreinte (16) vers un point le plus proche de la portion de liaison (18), augmente de largeur.

11. Pièce moulée par injection selon l'une quelconque des revendications précédentes, dans laquelle la largeur du rehaussement (58), en observant le long de l'étendue centrale (44) dans une première région (60) du rehaussement (58), à proximité de l'empreinte (16), augmente plus faiblement que dans une deuxième région (62) du rehaussement (58) qui est plus éloignée de l'empreinte (16) que la première région (60).

12. Pièce moulée par injection selon l'une quelconque des revendications précédentes, dans laquelle la hauteur du rehaussement (58) augmente en s'éloignant de l'étendue centrale (44), en particulier essentiellement en continu et essentiellement sur la largeur respective du rehaussement (58).

13. Pièce moulée par injection selon l'une quelconque des revendications précédentes, dans laquelle le rehaussement (58) est opposé à l'empreinte (16) au niveau d'un premier côté de la deuxième portion (14) dans la direction d'injection (50).

14. Pièce moulée par injection selon l'une quelconque des revendications précédentes, dans laquelle la hauteur de la première portion (12) qui s'étend au moins approximativement perpendiculairement au premier plan (XY), le long d'un prolongement imaginaire de l'étendue centrale (44), augmente au-delà de la portion de liaison (18) jusque dans la première portion (12).
